# FASCICULE DE BREVET EUROPEEN

(11) **EP 1 308 386 B1**
(45) Date de publication et mention de la délivrance du brevet: **25.01.2006**
(21) Numéro de dépôt: 02292540.8
(22) Date de dépôt: 15.10.2002
(51) Int. Cl.: B64D 17/34

(54) **Glisseur à tuyères pour parachutes**
Gleiter mit Düsenanordnung für einen Fallschirm
Glider with nozzle for a parachute

(30) Priorité: 05.11.2001 FR 0114280
(43) Date de publication de la demande: 07.05.2003
(73) Titulaire: Parachutes De France S.A., 95280 Jouy le Moutier (FR)
(72) Inventeur: Auvray, Michel, 95430 Auvers sur Oise (FR)
(74) Mandataire: Prugneau, Philippe

(56) Documents cités:
- WO-A-98/52820
- GB-A- 1 098 286
- US-A- 2 566 585
- US-A- 4 678 145
- US-A- 4 863 119
- US-A- 5 005 785

## Description

L'invention concerne un glisseur pour parachute permettant l'ouverture progressive de la voilure d'un parachute rond ou de type aile souple gonflée, comprenant une toile plane ou en forme de cloche dont une face forme un intrados.

L'invention s'applique aux parachutes de charge ou à personnel, et plus particulièrement à des parachutes destinés à être largués à très haute altitude, telle que par exemple 10 000 ou 12 000 mètres, mais elle pourra aussi s'appliquer aux parachutes destinés à être largués aux altitudes usuelles en dessous de 6000 mètres.

Après le largage mais avant le déploiement de la voilure du parachute, un tel glisseur est déployé automatiquement pendant une phase dite de temporisation pour freiner la descente du parachute et permette un déploiement de la voilure à une vitesse suffisamment faible, puis est rétracté après déploiement complet de la voilure du parachute. Plus particulièrement, dans un parachute, la charge est suspendue à la voilure par une pluralité de suspentes. Ces suspentes ont leurs extrémités supérieures fixées à une partie inférieure de la voilure, les points de fixation étant répartis sur cette partie inférieure. Les extrémités inférieures des suspentes sont réunies en plusieurs groupes, chaque groupe de suspentes étant relié à la charge par un élévateur. Le glisseur est intercalé entre la voilure et la charge et comporte généralement une pluralité d'oeillets dans lesquels passent des faisceaux de suspentes. Pendant la temporisation, le flux aérodynamique exerce une pression sur l'intrados du glisseur ce qui restreint le flux d'air entrant dans la voilure et permet une ouverture progressive de celle-ci à basse vitesse. Lors du déploiement de la voilure du parachute, les suspentes tendent à s'éloigner les unes des autres, ce qui a pour effet de chasser le glisseur vers la charge où il peut être rétracté.

Un tel glisseur est décrit dans le document US 5 005 785.

Les glisseurs utilisés actuellement sont conçus pour des largages à des altitudes inférieures à 6 000 mètres et pour des charges allant jusqu'à 200 kg. Dans le cas d'un largage à très haute altitude, par exemple entre 10000 mètres et 12000 mètres et pour des charges plus importantes, la vitesse en chute libre devient si importante que les glisseurs utilisés actuellement ne fonctionnent plus correctement. En particulier, on a constaté que dans ces conditions d'utilisation, le glisseur a tendance à se positionner de façon oblique sous la voilure de sorte que son action de ralentisseur peut alors être significativement diminuée, voire être inexistante. Il s'ensuit que la voilure du parachute peut s'ouvrir brutalement ce qui peut être dangereux pour le personnel et/ou dommageable pour la charge transportée.

Le but de l'invention est de remédier à cet inconvénient en proposant un glisseur pour parachute perfectionné pour fonctionner à haute altitude et grande vitesse.

A cet effet, l'invention a pour objet un glisseur pour parachute comprenant une toile plane ou en forme de cloche dont une face forme un intrados, caractérisé en ce que ladite toile est bordée du côté de l'intrados par un ourlet périphérique fixé à la toile en une pluralité de points de fixation éloignés les uns des autres d'une distance suffisante pour que l'ourlet périphérique baille entre les points de fixation sous l'action d'un flux d'air dirigé en direction de l'intrados. Un tel glisseur en place sur une voilure en situation d'ouverture emprisonne la pression dynamique du flux d'air. Cette surpression déforme l'ourlet qui en baillant forme des tuyères réparties sur le contour du glisseur. Ces tuyères ainsi formées permettent de mieux maîtriser la déviation du flux d'air insufflé dans la voilure en créant une dépression maximale au-dessus du glisseur. La voilure peut rester ainsi stabilisée pendant une phase de temporisation assez longue permettant un déploiement de la voiture à une vitesse de descente suffisamment faible. Dans un second temps, le gonflement de la voilure du parachute est assuré par une ouverture d'admission d'air formée dans la toile du glisseur, cette ouverture pouvant être calibrée pour rompre l'équilibre à la fin de la phase de temporisation et obtenir un gonflement progressif de la voilure.

Chaque point de fixation de l'ourlet sur l'intrados du glisseur peut être formé par un oeillet serti dans l'ourlet et dans la toile ou par une couture. La toile du glisseur peut avoir un contour de forme carrée, rectangulaire, ronde, ou polygonale ou encore d'une forme identique à la forme en plan de la voilure du parachute. L'ouverture d'admission d'air dans la toile du glisseur peut être de toute forme appropriée, par exemple ronde, carrée, rectangulaire, en forme de fente simple ou en croix. Elle peut être centrée ou excentrée, modulable ou non. Un tube de tissu formant tuyère peut être fixé du côté de l'extrados du glisseur sur le bord de l'ouverture d'admission d'air pour diriger le flux d'air gonflant la voilure avec un angle particulier ou vers un point particulier de la voilure. La toile du glisseur peut être monocouche ou multicouches. L'ourlet et la toile du glisseur peuvent être formés en une seule pièce, l'ourlet étant alors formé par les bords de la toile rabattus du côté de l'intrados. L'ourlet peut être également une pièce rapportée sur la toile du glisseur. Pour obtenir un effet de tuyère satisfaisant, la largeur de l'ourlet sera comprise entre 6 et 25% de la largeur ou de la profondeur du glisseur.

L'invention est maintenant décrite plus en détail ci-après et illustrée par les dessins annexés.
La figure 1 est une représentation en vue de dessous d'un exemple de réalisation d'un glisseur selon l'invention ;
La figure 2 est une représentation en vue de dessous du glisseur montré sur la figure 1 quand il est soumis à un flux d'air dirigé vers son intrados ;
La figure 3 est une représentation en vue de profil du glisseur montré sur la figure 1 quand il est soumis à un flux d'air dirigé vers son intrados ;
La figure 4 est une représentation d'une variante de l'invention dans laquelle les points de fixation sont des pattes cousues sur la toile et l'ourlet ;
La figure 5 est une représentation de la découpe d'une toile permettant de réaliser un glisseur selon l'invention ;
La figure 6 illustre la circulation d'air sous l'intrados d'un glisseur selon l'invention ;
La figure 7 illustre la circulation d'air sous l'intrados d'un glisseur de l'état antérieur de la technique ;
La figure 8 montre un glisseur selon l'invention ayant un contour périphérique hexagonal ;
La figure 9 montre en perspective un glisseur selon l'invention avec une ouverture d'admission d'air munie d'un tube de tissu formant tuyère;
La figure 10 montre un glisseur selon l'invention ayant un contour de forme identique à la forme en plan de la voilure de type aile d'un parachute.

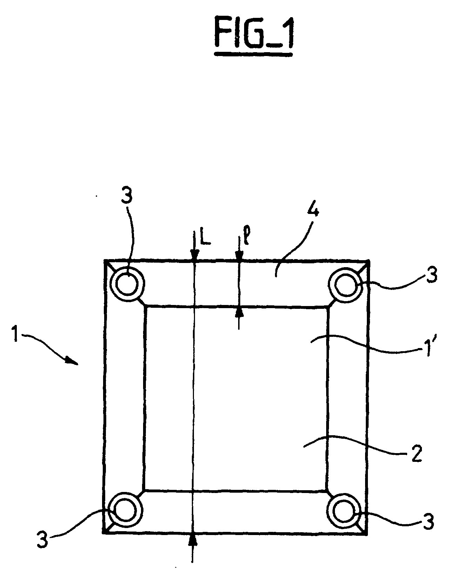

Comme visible figure 1, le glisseur 1 est constitué d'une toile de tissu 1' dont une face 2 forme un intrados. La toile peut être plane ou en forme de cloche. Le glisseur comporte sur son contour une pluralité d'oeillets 3 destinés à être traversés par des groupes de suspentes du parachute. Dans l'exemple de la figure 1, le glisseur a un contour carré et les oeillets sont disposés aux angles du contour, mais d'autres formes peuvent être utilisées, comme par exemple des formes de polygone.

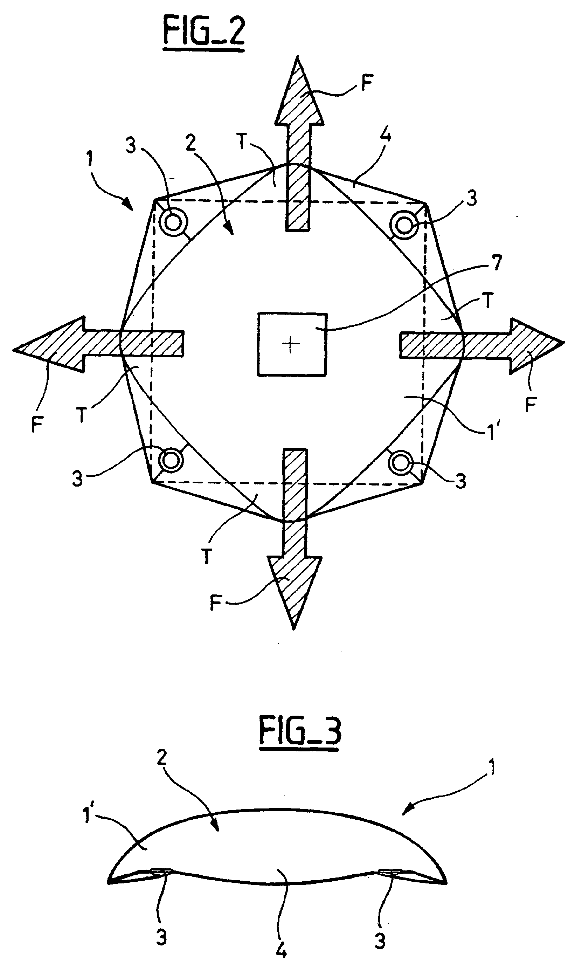

Selon l'invention, la toile 1' est bordée du côté de l'intrados par un ourlet périphérique 4 dont le bord intérieur est fixé à la toile en une pluralité de points de fixation distincts. Ces points de fixation sont éloignés les uns des autres d'une distance suffisante pour que l'ourlet périphérique 4 soit libre de bailler entre deux points de fixation successifs lorsque le glisseur est soumis à un flux d'air dirigé vers l'intrados 2. Lorsque le glisseur est déployé et soumis à un tel flux d'air, l'ourlet périphérique 4 baille entre les points de fixation pour former des tuyères T canalisant l'air radialement. Comme visible sur les figures 2 et 3, l'ourlet périphérique 4 baille entre les points de fixation adjacents constitués ici par des oeillets 3 disposés sur le pourtour du glisseur et dans lesquels passent les suspentes du parachute. Avec cet agencement, le débit d'air gonflant la voilure du parachute est réduit, ce qui augmente la durée de temporisation précédant le déploiement complet de la voilure. Il a en outre été constaté que grâce à ces tuyères T éjectant l'air radialement comme montré par les flèches F, la distribution d'efforts sur le glisseur est mieux équilibrée, ce qui évite qu'il se positionne de façon oblique.L'ourlet pourra avoir par exemple une largeur I comprise entre six et vingt-cinq pour cent de la largeur L ou de la profondeur du glisseur.

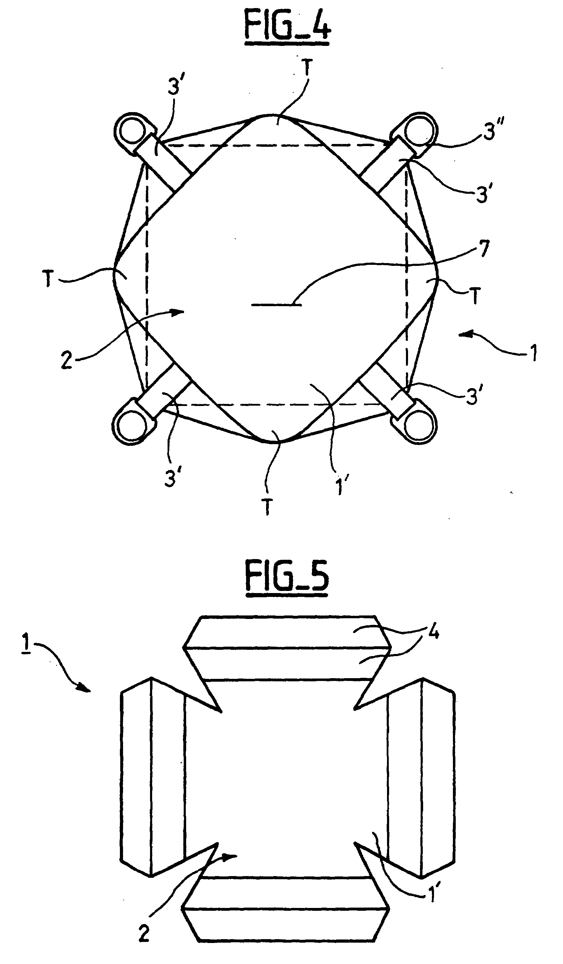

Dans une variante de réalisation représentée figure 4, les points de fixation sont réalisés par des pattes en tissu 3' cousues sur l'ourlet périphérique 4 et sur la toile 1'. Chaque patte est munie d'un anneau 3" qui est positionné sur le bord extérieur du glisseur et qui est destiné à être traversé par des suspentes du parachute.

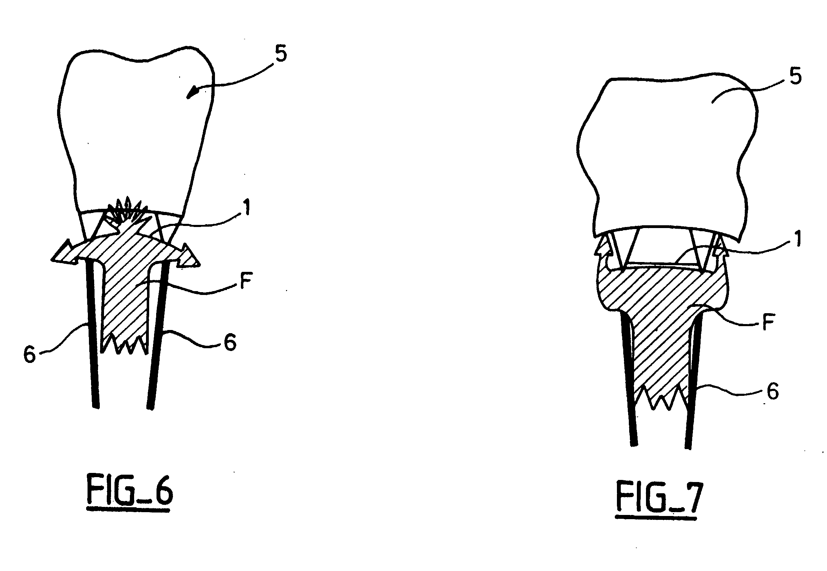

Dans les figures 6 et 7, on a représenté symboliquement le parcours des filets d'air F pendant une phase de temporisation, respectivement avec un glisseur selon l'invention et avec un glisseur de l'art antérieur. Les filets d'air F plaquent le glisseur 1 en extrémité supérieure des suspentes 6 qui sont fixées à la voilure 5. Dans l'art antérieur, l'air qui sort du glisseur 1 contourne l'intrados 2 pour repartir verticalement et gonfler la voilure 5 comme visible sur la figure 7, alors que selon l'invention, il est canalisé radialement par les tuyères formées par l'ourlet périphérique 4 qui baille de sorte qu'il contourne la voilure 5 sans pénétrer à l'intérieur comme visible sur la figure 6.

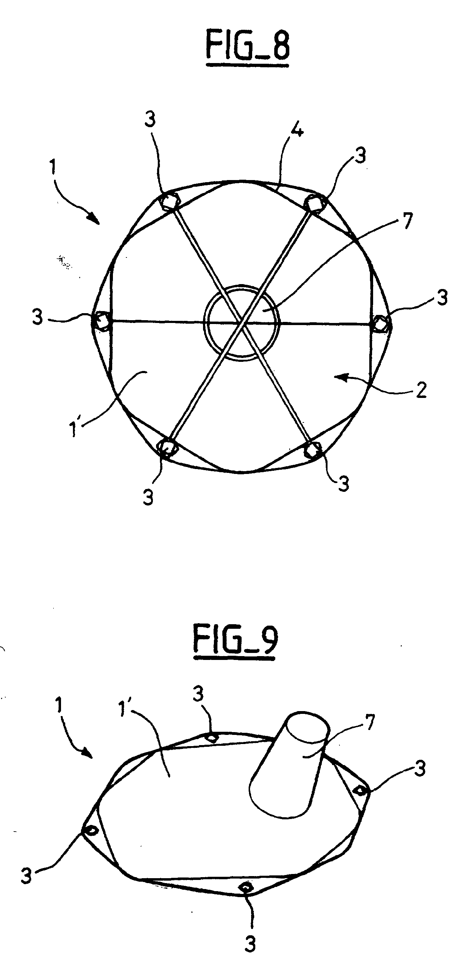

Avantageusement, le glisseur selon l'invention pourra comprendre une ouverture d'admission d'air 7 traversant la toile 1', telle que représentée figure 2. Cette ouverture d'admission d'air 7 est destinée à laisser passer de l'air à travers le glisseur dans la voilure durant la phase de temporisation pour gonfler progressivement cette dernière. Avec cet agencement, la durée de temporisation pourra directement être ajustée en modifiant la forme ou la section de l'ouverture d'admission d'air 7 pour augmenter ou diminuer le débit d'air introduit dans la voilure. Cette ouverture d'admission d'air pourra avoir une forme ronde, carrée, rectangulaire ou encore être une fente droite ou en forme de croix. Cette ouverture d'admission d'air 7 pourra être placée au centre de la toile 1' ou encore excentrée pour injecter de l'air dans une zone particulière de la voilure durant la phase de temporisation. Dans un mode de réalisation particulier représenté figure 9, un tube de tissu 8 est cousu sur le bord de l'ouverture d'admission d'air 7 du côté de l'extrados du glisseur pour former une tuyère dirigeant plus précisément l'air entrant dans la voilure. Cet agencement permet notamment de réaliser un gonflage et un déploiement de la voilure selon une séquence prédéterminé en dirigeant l'air vers une zone particulière de la voilure.

Comme indiqué plus haut, les points de fixation de l'ourlet 4 sur la toile 1' peuvent être des oeillets sertis dans la toile ou encore des pattes cousues sur la toile et munies d'anneaux. Les oeillets et anneaux peuvent être traversés par les suspentes du parachute.

La figure 5 donne un exemple de découpe d'une toile permettant de réaliser un glisseur selon l'invention de forme sensiblement carrée, sur la base d'une seule pièce de toile prédécoupée. Dans cet exemple, l'ourlet périphérique 4 est formé par un double repli destiné à être rabattu sur l'intrados 2. Ce double repli augmente la résistance mécanique aux efforts aérodynamiques. L'ourlet périphérique pourra également être constitué d'une autre pièce de toile rapportée, cousue à la périphérie de l'intrados 2.

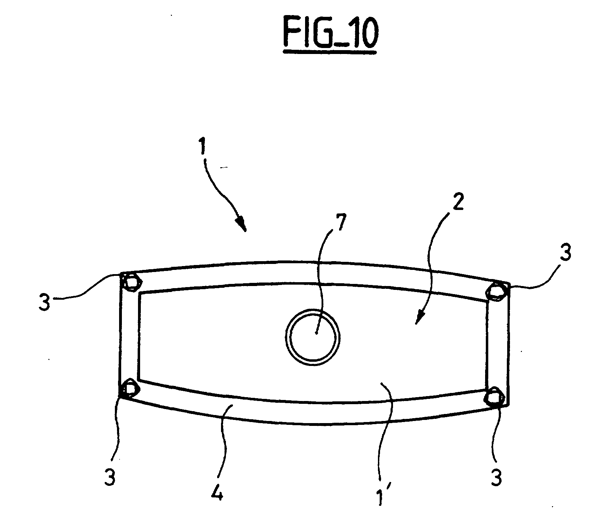

Dans l'exemple donné figures 1 à 5, le glisseur selon l'invention a sensiblement une forme carrée comprenant quatre oeillets ou anneaux, mais il s'adapte à d'autres formes classiques comme par exemple la forme hexagonale comprenant six oeillets ou anneaux, représentée figure 8. D'une façon plus générale, le glisseur pourra avoir une forme polygonale en ayant un point de fixation de l'ourlet sur l'intrados du glisseur situé à chaque sommet du polygone. Le glisseur peut également s'adapter à d'autres formes, en ayant par exemple la forme en plan d'une voilure de parachute sensiblement rectangulaire, avec un oeillet ou une patte avec un anneau à chaque sommet du rectangle, comme représenté dans la figure 10.

## Revendications

1. Glisseur pour parachute (5) comprenant une toile (1') plane ou en forme de cloche dont une face forme un intrados (2), **caractérisé en ce que** ladite toile (1') est bordée du côté de l'intrados (2) par un ourlet périphérique (4) fixé à la toile (1') en une pluralité de points de fixation (3) éloignés les uns des autres d'une distance suffisante pour que l'ourlet périphérique (4) baille entre les points de fixation (3) sous l'action d'un flux d'air dirigé vers l'intrados (2).

2. Glisseur selon la revendication 1, dans lequel chaque point de fixation est formé par un oeillet (3) serti sur l'ourlet périphérique (4) et sur la toile (1'), chaque oeillet (3) étant destiné à être traversé par des suspentes du parachute (5).

3. Glisseur selon la revendication 1, dans lequel chaque point de fixation est formé par une patte de tissu (3') cousue sur l'ourlet périphérique (4) et sur la toile (1'), et munie d'un anneau (3'') destiné à être traversé par des suspentes du parachute (5).

4. Glisseur selon l'une des revendications 1 à 3, comprenant une ouverture d'admission d'air (7) traversant la toile (1').

5. Glisseur selon la revendication 4, dans lequel l'ouverture d'admission d'air (7) est ronde, carrée, rectangulaire, ou en forme de fente.

6. Glisseur selon la revendication 4 ou 5, dans lequel l'ouverture d'admission d'air (7) est excentrée.

7. Glisseur selon la revendication 4, comprenant un tube de tissu fixé du côté extrados de la toile sur le bord de l'ouverture d'admission d'air (7).

8. Glisseur selon l'une des revendications 1 à 7, dans lequel l'ourlet périphérique (4) et la toile (1') sont en une seule pièce.

9. Glisseur selon l'une des revendications 1 à 7, dans lequel l'ourlet périphérique (4) est une pièce rapportée sur la toile.

10. Glisseur selon l'une des revendications 1 à 9, dans lequel la toile (1') a un contour polygonal, chaque point de fixation (3) étant disposé à un angle du polygone.

11. Glisseur selon l'une des revendications 1 à 10, dans lequel l'ourlet a une largeur comprise entre six et vingt-cinq pourcent de la largeur ou de la profondeur du glisseur.

## Patentansprüche

1. Slider (Öffnungsverzögerer) für einen Fallschirm (5), bestehend aus einem flächigen oder glockenförmigen Stoff (1'), dessen eine Seite eine innere Bogenfläche (2) bildet, **dadurch gekennzeichnet, dass** besagter Stoff (1') auf der Seite der inneren Bogenfläche (2) mit einem umlaufenden Saum (4) begrenzt ist, der am Stoff (1') in einer Vielzahl von Befestigungspunkten (3) befestigt ist, die in einem Abstand voneinander angeordnet sind, der so groß ist, dass sich der umlaufende Saum (4) unter Einwirkung eines gegen die innere Bogenfläche (2) gerichteten Luftstroms zwischen den Befestigungspunkten (3) aufblähen kann.

2. Slider nach Anspruch 1, bei dem jeder Befestigungspunkt durch eine in den umlaufenden Saum (4) und den Stoff (1') eingefasste Öse (3) ausgebildet ist, wobei jede Öse (3) zum Durchziehen der Fangleinen des Fallschirms (5) bestimmt ist.

3. Slider nach Anspruch 1, bei dem jeder Befestigungspunkt durch eine auf dem umlaufenden Saum (4) und dem Stoff (1') aufgenähte Stoffleiste (3') ausgebildet ist, die mit einem Ring (3") zum Durchziehen der Fangleinen des Fallschirms (5) versehen ist.

4. Slider nach einem der Ansprüche 1 bis 3, mit einer durch den Stoff (1') geführten Lufteintrittsöffnung (7).

5. Slider nach Anspruch 4, bei dem die Lufteintrittsöffnung (7) rund, quadratisch, rechteckig oder schlitzförmig ausgebildet ist.

6. Slider nach Anspruch 4 oder 5, bei dem die Lufteintrittsöffnung (7) außermittig angeordnet ist.

7. Slider nach Anspruch 4, mit einem an der äußeren Bogenfläche des Stoffes am Rand der Lufteintrittsöffnung (7) befestigten Stoffrohr.

8. Slider nach einem der Ansprüche 1 bis 7, bei dem der umlaufende Saum (4) und der Stoff (1') aus einem Stück bestehen.

9. Slider nach einem der Ansprüche 1 bis 7, bei dem der umlaufende Saum (4) aus einem auf den Stoff aufgesetzten Teil besteht.

10. Slider nach einem der Ansprüche 1 bis 9, bei dem der Stoff (1') eine Vieleckkontur hat, wobei jeder Befestigungspunkt (3) an einem Eckpunkt des Vielecks angeordnet ist.

11. Slider nach einem der Ansprüche 1 bis 10, bei dem der Saum eine Breite von sechs bis fünfundzwanzig Prozent der Breite oder der Tiefe des Sliders hat.

## Claims

1. Slider for parachute (5) comprising a plane or bell-shaped sheet (1'), one face of which forms a lower surface (2), **characterised in that** the said sheet (1') is bordered on the side of the lower surface (2) by a peripheral hem (4) fixed to the sheet (1') at a plurality of fixing points (3) separated from one another by a sufficient distance for the peripheral hem (4) to open out between the fixing points (3) under the action of an air flow directed towards the lower surface (2).

2. Slider according to Claim 1, in which each fixing point is formed by an eyelet (3) mounted on the peripheral hem (4) and on the sheet (1'), each eyelet (3) being intended to be traversed by suspension lines of the parachute (5).

3. Slider according to Claim 1, in which each fixing point is formed by a fabric tab (3') sewn onto the peripheral hem (4) and onto the sheet (1'), and provided with a ring (3") intended to be traversed by suspension lines of the parachute (5).

4. Slider according to one of Claims 1 to 3, comprising an air inlet opening (7) passing through the sheet (1').

5. Slider according to Claim 4, in which the air inlet opening (7) is round, square, rectangular, or slit-shaped.

6. Slider according to Claim 4 or 5, in which the air inlet opening (7) is eccentric.

7. Slider according to Claim 4, comprising a fabric tube fixed on the side of the upper surface of the sheet on the border of the air inlet opening (7).

8. Slider according to one of Claims 1 to 7, in which the peripheral hem (4) and the sheet (1') are of one piece.

9. Slider according to one of Claims 1 to 7, in which the peripheral hem (4) is a piece attached to the sheet.

10. Slider according to one of Claims 1 to 9, in which the sheet (1') has a polygonal contour, each fixing point (3) being arranged at an angle of the polygon.

11. Slider according to one of Claims 1 to 10, in which the hem has a width of between six and twenty-five per cent of the width or depth of the slider.
